# EUROPÄISCHE PATENTANMELDUNG

(11) **EP 1 329 397 A1**
(43) Veröffentlichungstag der Anmeldung: **23.07.2003**
(21) Anmeldenummer: 02001328.0
(22) Anmeldetag: 18.01.2002
(51) Int. Cl.: B65G 1/04, B65H 19/12

(54) **Transportvorrichtung**

(71) Anmelder: Westfalia WST Systemtechnik GmbH & Co. KG, 33829 Borgholzhausen (DE)
(72) Erfinder: Upmeyer Ulrich, 33829 Borgholzhausen (DE)
(74) Vertreter: Philipp, Matthias, Dr.

(57) **Zusammenfassung**

Transportvorrichtung (30,30') mit mindestens einer Aufnahmeeinrichtung (3) zum Aufnehmen von Gegenständen (1) und einem in Längsrichtung (2) relativ zu der Aufnahmeeinrichtung (3) verfahrbaren Hubfahrzeug (14), das eine Hubeinrichtung (22) zum Anheben und Absenken der Gegenstände (1) aufweist, wobei die Hubeinrichtung (22) einen mehrarmigen Tragrost mit seitlich abstehenden Tragarmen (26) und die Aufnahmeeinrichtung (3) beiderseits des Tragrost (22) angeordnete Aufnahmeroste (3a,3b) mit zueinander weisenden Aufnahmearmen (6a,6b) aufweist, wobei die Trag- und Aufnahmeroste (22;3a,3b) für gegenseitige Durchdringung ausgebildet sind, so daß das Hubfahrzeug (14) bei über die Aufnahmeroste (3a,3b) angehobenen oder unter die Aufnahmeroste (3a,3b) abgesenkten Tragrost (22) in Längsrichtung (2) verfahrbar ist.

## Beschreibung

Die Erfindung betrifft eine Transportvorrichtung mit mindestens einer Aufnahmeeinrichtung zum Aufnehmen von Gegenständen und einem in Längsrichtung relativ zu der Aufnahmeeinrichtung verfahrbaren Hubfahrzeug, das eine Hubeinrichtung zum Anheben und Absenken der Gegenstände aufweist.

Eine derartige Transportvorrichtung ist bspw. aus dem deutschen Gebrauchsmuster DE 299 08 233 bekannt, bei dem ein Satellitenfahrzeug zum Ein- und Auslagern von Papierrollen einen Hub- und Transportwagen aufweist, der in einem Lagerprofil, auf dem eine oder mehrere Papierrollen gelagert sind, geführt verfahrbar ist.

Diese bekannte Lösung hat sich insbesondere zum Ein- und Auslagern von Papierrollen in Lagerungseinrichtungen bewährt. Nachteilig ist jedoch, daß sich die bekannte Transportvorrichtung nur in Ausnahmefällen unterflur einsetzen einsetzen läßt, da das Hubfahrzeug in einem Transportkanal arbeitet, der oben offen sein muß, um den Durchtritt der als Hub- und Transportplattform ausgebildeten Hubeinrichtung zu ermöglichen.

Die Aufgabe der Erfindung besteht darin, die bekannte Transportvorrichtung dahingehend zu verbessern, daß sie von Förderfahrzeugen überfahren werden kann, und insbesondere in Lager- und Versorgungseinrichtungen unterflur eingesetzt und von Flurförderfahrzeugen überfahren werden kann.

Diese Aufgabe wird erfindungsgemäß bei einer gattungsgemäßen Transportvorrichtung dadurch gelöst, daß die Hubeinrichtung einen mehrarmigen Tragrost mit seitlich abstehenden Tragarmen und die Aufnahmeeinrichtung beiderseits des Tragrosts angeordnete Aufnahmeroste mit zueinander weisenden Aufnahmearmen aufweist, wobei die Trag- und Aufnahmeroste für gegenseitige Durchdringung ausgebildet sind, so daß das Hubfahrzeug bei über die Aufnahmeroste angehobenem oder unter die Aufnahmeroste abgesenktem Tragrost verfahrbar ist.

Es kann vorgesehen sein, daß der Tragrost einen Längsträger relativ geringer Breite aufweist, wobei die Breite des Längsträgers im wesentlichen der Breite der Tragarme entsprechen kann. Ferner können die Aufnahmearme im wesentlichen um die Breite des Mittelträgers voneinander beabstandet sein, so daß der Vorteil einer relativ schmalen Unterbrechung der durch die Aufnahmeroste gebildeten Auflagefläche erzielt wird.

Bevorzugt ist vorgesehen, daß die Länge der Aufnahmeeinrichtung der Länge eines oder mehrerer zu transportierender Gegenstände entspricht.

Zweckmäßigerweise ist vorgesehen, daß das Hubfahrzeug Räder aufweist, von denen mindestens eines angetrieben sein kann. Vorzugsweise besitzt das Hubfahrzeug zum Betrieb in einem Transportkanal Tragräder und seitliche Führungsräder.

Bevorzugt ist vorgesehen, daß die Aufnahmeeinrichtung in einem Bodenbereich angeordnet ist, wobei das Hubfahrzeug in einem unterflur, d.h. unterhalb des Bodenniveaus angeordneten Transportkanal arbeitet. Zweckmäßigerweise ist die Aufnahmeeinrichtung so ausgebildet, daß sie von Flurförderfahrzeugen überfahrbar ist.

Es kann vorgesehen sein, daß das Hubfahrzeug mehrere unabhängig voneinander betätigbare Tragroste aufweist.

Zum Transportieren von zylindrischen Gegenständen in einer Orientierung, bei der die Zylinderachse horizontal liegt, und insbesondere zum Transportieren von Papierrollen ist bevorzugt vorgesehen, daß Trag- und Aufnahmeroste jeweils im Querschnitt zylindrische Oberflächenkontur aufweisen.

Es kann vorgesehen sein, daß das Hubfahrzeug als Satellitenfahrzeug eines Förderfahrzeugs ausgebildet ist. Zweckmäßigerweise ist das Förderfahrzeug als Regalfahrzeug ausgebildet, mit dem das Hubfahrzeug horizontal und vertikal verfahrbar ist. Es kann vorgesehen sein, daß das Hubfahrzeug energie- und steuerungstechnisch über mindestens ein ausziehbares Kabel mit dem Förderfahrzeug verbunden ist. Zweckmäßigerweise ist das Hubfahrzeug selbständig angetrieben und weist eine drahtlose Fernsteuerung auf.

Die Erfindung wird nachfolgend anhand eines Ausführungsbeispiels erläutert, wobei auf eine Zeichnung Bezug genommen ist, in der
Fig. 1 eine Draufsicht auf eine erfindungsgemäße Transportvorrichtung zeigt,
Fig. 2 einen vergrößerten Ausschnitt aus Fig. 1 zeigt,
Fig. 3 eine schematische Querschnittsansicht der Transportvorrichtung nach Fig. 1 zeigt, wobei die Hubeinrichtung abgesenkt ist,
Fig. 4 eine Ansicht entspricht Fig. 3 zeigt, wobei die Hubeinrichtung angehoben ist, und
Fig. 5 eine Draufsicht auf eine Anlage zum Zuführen von Papierrollen an eine Druckmaschine zeigt, bei der die erfindungsgemäße Transportvorrichtung Verwendung findet.

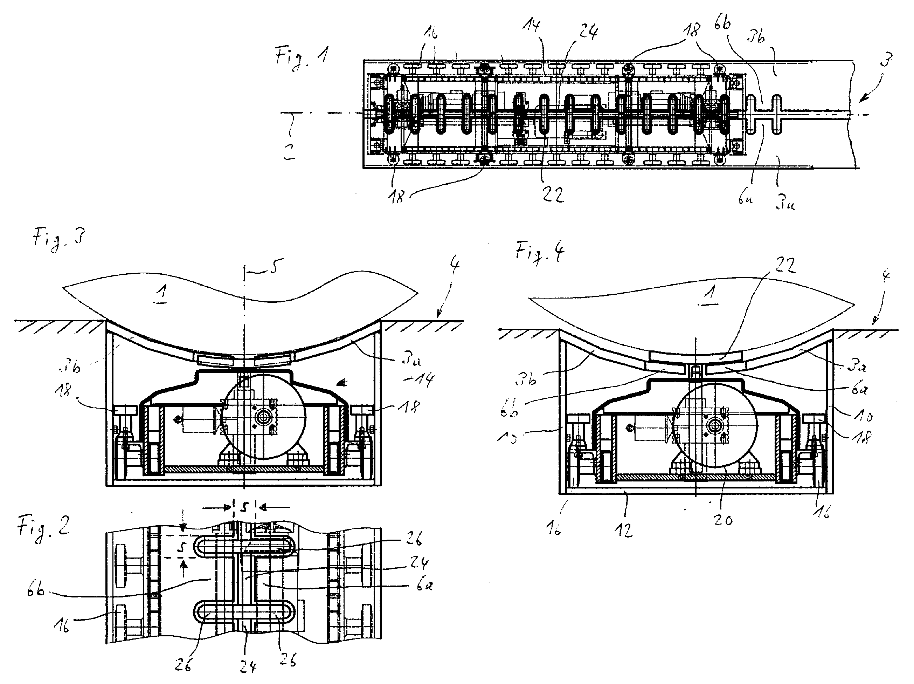

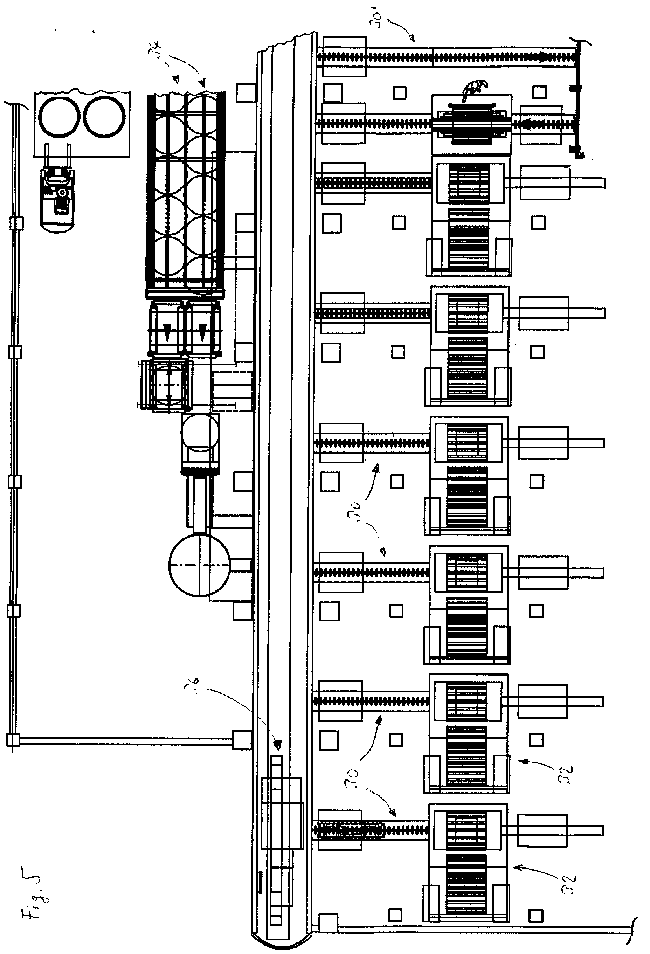

Zunächst sei auf Fig. 1 bis 4 Bezug genommen, die Drauf- und Querschnittsansichten einer erfindungsgemäßen Transportvorrichtung zeigen. Die Transportvorrichtung dient im dargestellten Beispiel dem Transport von zylindrischen Papierrollen 1 in liegender Orientierung, d.h. mit horizontaler Achse, in Längsrichtung 2 der Transportvorrichtung. Im unbewegten Zustand ruhen die Papierrollen auf einer Aufnahmeeinrichtung 3, die im Querschnitt eine im wesentlichen zylindrische Oberflächenkontur aufweist, deren Durchmesser dem Durchmesser der zu transportierenden Papierrollen entspricht. Wie Fig. 3 und 4 zeigen, kann die Oberflächenkontur der Aufnahmeeinrichtung 3 auch abschnittsweise aus ebenen Bereichen zusammengesetzt sein, so daß eine im wesentlichen zylindrische Kontur gebildet wird.

Im dargestellten Beispiel ist die Aufnahmeeinrichtung 3 in den Boden 4 eingelassen, d.h. die seitlichen Ränder der Aufnahmeeinrichtung liegen in Höhe des Bodens, d.h. bspw. des Bodens einer Halle, in der die Transportvorrichtung arbeitet.

Wie Fig. 1 und 2 zeigen, besteht die Aufnahmeeinrichtung 3 im wesentlichen aus zwei beiderseits einer Längsmittelebene 5 angeordneten Aufnahmerosten 3a, 3b, die jeweils eine Anzahl von zueinander weisenden, in Längsrichtung beabstandeten Aufnahmearmen 6a, 6b aufweisen.

Unterhalb der Aufnahmeeinrichtung 3 ist im Boden ein Transportkanal 8 mit rechteckigem Querschnitt gebildet, der Seitenwände 10 zum Abstützen der Aufnahmeeinrichtung 3 sowie eine Bodenplatte 12 zur Lagerung eines Hubfahrzeugs 14 aufweist.

Das Hubfahrzeug 14 ist mit einer Anzahl von Tragrädern 16 mit horizontaler Achse versehen, von denen mindestens eines mit einer nicht im einzelnen dargestellten Antriebseinheit zur Bewegung vorwärts und rückwärts in Längsrichtung 2 motorisch angetrieben ist, sowie mit einer Anzahl seitlicher Führungsräder 18 mit vertikaler Achse, die an den Seitenwänden 10 abrollen und das Hubfahrzeug 14 quer zur Längsrichtung 2 führen. Selbstverständlich könnte auch eines oder mehrere der Führungsräder 18, zusätzlich oder alternativ zu einem oder mehreren angetriebenen Tragrädern, angetrieben sein.

Das Hubfahrzeug 14 weist einen mittels eines schematisch dargestellten Hubantriebs 20 anheb- und absenkbaren, mehrarmigen Tragrost 22 auf, der in Fig. 3 abgesenkt und in Fig. 4 angehoben dargestellt ist. Der Tragrost besteht aus einem in Längsrichtung angeordneten Längsträger 24 mit seitlich davon abgehenden Tragarmen 26.

Die Maße von Längsträger 24, Tragarmen 26 und Aufnahmeroste 3a, 3b sind so aufeinander abgestimmt, daß der Tragrost aus der in Fig. 4 dargestellten, angehobenen Stellung in die in Fig. 3 dargestellte, abgesenkte Stellung bewegt werden kann, in der sich, wie Fig. 1 und 2 zeigen, die Tragarme 26 jeweils mit geringem Abstand zwischen benachbarten Aufnahmearmen 6a, 6b der Aufnahmeroste 3a, 3b befinden. In der angehobenen Stellung befinden sich die Tragarme 26 vollständig außerhalb der Aufnahmearme 6a, 6b, so daß der Hubwagen 14 beladen (Fig. 4) oder leer ungehindert in Längsrichtung verfahren werden kann.

Wie Fig. 3 und 4 zeigen, ist die Anordnung im vorliegenden Beispiel so getroffen, daß der Tragrost 22 über die Aufnahmeroste 3a, 3b, jedoch nicht vollständig unterhalb dieser bewegt werden kann. Dies könnte, einen entsprechend tiefer ausgebildeten Transportkanal 8 vorausgesetzt, problemlos vorgesehen werden, woraus sich dann die Möglichkeit ergibt, das Hubfahrzeug 14 vollständig unterhalb der Aufnahmeeinrichtung 3 zu verfahren, bspw. auch unter auf der Aufnahmeeinrichtung 3 gelagerten Gegenständen hinweg.

Wie Fig. 1 und 2 zeigen, entspricht die Breite des Längsträgers 24 (Abmessung quer zur Längsrichtung) im wesentlichen der Breite der Tragarme 26 (Abmessung in Längsrichtung), um sicherzustellen, daß die erforderlichen gegenseitigen Abstände zwischen benachbarten Aufnahmearmen 6a, 6b weder in Längsrichtung noch quer dazu an irgendeiner Stelle größer als ein vorgegebenes Maß s sind, wodurch gewährleistet ist, daß die Aufnahmeeinrichtung 3 von Fahrzeugen jeder Art überfahren werden kann, deren Räder bzw. Reifen ein Überfahren des genannten (Spalt-)Maßes s ermöglichen, bspw. Staplerfahrzeuge oder sonstige (Flur-) Förderfahrzeuge.

Wie man Fig. 4 entnimmt, sind auch die Tragarme 26 an ihrer Oberseite mit einer zylindrischen Kontur versehen, die dem Außendurchmesser der zu transportierenden Papierrollen 1 entspricht, so daß diese im angehobenen bzw. Transportzustand sicher und beschädigungsfrei erfaßt werden.

Fig. 5 zeigt eine schematische Draufsicht auf eine Anlage, in der Papierrollen 1 angeliefert, abgestapelt und auf erfindungsgemäße Transportvorrichtungen 30 gebracht werden, die sie schließlich über Zwischenlagereinrichtungen 32 an eine nicht dargestellte Druckmaschine (anschließend an den unteren Rand der Darstellung nach Fig. 5) transportieren.

Die Anlieferung der Papierrollen 1 ist im oberen rechten Bereich der Fig. 5 dargestellt, wobei einzelne Papierrollen 1 auf Förderbändern 34 herantransportiert, vereinzelt und einem Förderfahrzeug 36 zugeführt werden. Das Förderfahrzeug 36 legt die Papierrollen 1 auf den Aufnahmeeinrichtungen 3 der einzelnen Transportvorrichtungen 30 ab, von wo sie in der vorstehend beschriebenen Weise mit den Hubfahrzeugen der Transportvorrichtungen in Richtung auf die Zwischenlagereinrichtungen 32 weitertransportiert werden. Auch ein unmittelbarer Transport von Papierrollen an die (nicht dargestellte) Druckmaschine ist möglich, wie eine Transportvorrichtung 30' zeigt.

Die in Fig. 5 dargestellte Anordnung von Transportvorrichtungen 30, 30' hat gegenüber dem Stand der Technik den entscheidenden Vorteil, daß die Aufnahmeeinrichtungen der Transportvorrichtungen gefahrlos betreten und auch von Flurförderfahrzeugen überfahren werden können, wodurch eine zusätzliche Flexibilität im organisatorischen Ablauf erreicht wird.

In Ausgestaltung der Erfindung kann vorgesehen sein, daß das Hubfahrzeug 14 als Satellitenfahrzeug des Förderfahrzeugs 36 ausgebildet ist, welches bevorzugt als Regalfahrzeug ausgestaltet sein kann. Die Funktionsweise ist dann so, daß das Regalfahrzeug 36 in horizontaler und vertikaler Richtung vor eine ausgewählte Regalgasse fährt, das Hubfahrzeug horizontal in die Gasse einfährt und einen Gegenstand, bevorzugt eine Papierrolle, aus dem Lager holt und dem Förderfahrzeug zuführt, worauf dann das Förderfahrzeug zu einer ausgewählten Aufnahmeeinrichtung 30 fährt und das Hubfahrzeug in Höhe des Transportkanals bewegt, so daß das Hubfahrzeug den Gegenstand bzw. die Papierrolle entlang der Aufnahmeeinrichtung bis zu einem gewünschten Ort transportiert und dort absetzt. Das Hubfahrzeug ist in diesem Fall bevorzugt über eine Kabeltrommel energie- und steuerungsmäßig mit dem Regalfahrzeug verbunden. Auch eine Fernsteuerung, vom Förderfahrzeug oder einer Steuerungszentrale aus, ist denkbar.

### Bezugszeichenliste

- 1: Papierrolle
- 2: Längsrichtung
- 3: Aufnahmeeinrichtung
- 3a, 3b: Aufnahmeroste
- 4: Boden
- 6a, 6b: Aufnahmearm
- 8: Transportkanal
- 10: Seitenwand
- 12: Bodenplatte
- 14: Hubfahrzeug
- 16: Tragrad
- 18: Führungsrad
- 20: Hubantrieb
- 22: Tragrost
- 24: Längsträger
- 26: Tragarm
- 30, 30': Transportvorrichtung
- 32: Zwischenlagereinrichtung
- 34: Förderband
- 36: Förderfahrzeug

## Patentansprüche

1. Transportvorrichtung (30, 30') mit mindestens einer Aufnahmeeinrichtung (3) zum Aufnehmen von Gegenständen (1) und einem in Längsrichtung (2) relativ zu der Aufnahmeeinrichtung (3) verfahrbaren Hubfahrzeug (14), das eine Hubeinrichtung (22) zum Anheben und Absenken der Gegenstände (1) aufweist, **dadurch gekennzeichnet, daß** die Hubeinrichtung einen mehrarmigen Tragrost (22) mit seitlich abstehenden Tragarmen (26) und die Aufnahmeeinrichtung (3) beiderseits des Tragrost (22) angeordnete Aufnahmeroste (3a, 3b) mit zueinander weisenden Aufnahmearmen (6a, 6b) aufweist, wobei die Tragund Aufnahmeroste (22; 3a, 3b) für gegenseitige Durchdringung ausgebildet sind, so daß das Hubfahrzeug (14) bei über die Aufnahmeroste (3a, 3b) angehobenem oder unter die Aufnahmeroste (3a, 3b) abgesenkten Tragrost (22) in Längsrichtung (2) verfahrbar ist.

2. Transportvorrichtung nach Anspruch 1, **dadurch gekennzeichnet, daß** der Tragrost (22) einen Längsträger (24) relativ geringer Breite aufweist.

3. Transportvorrichtung nach Anspruch 2, **dadurch gekennzeichnet, daß** die Breite des Längsträgers (24) im wesentlichen der Breite der Tragarme (26) entspricht.

4. Transportvorrichtung nach Anspruch 2 oder 3, **dadurch gekennzeichnet, daß** die Aufnahmearme (6a, 6b) im wesentlichen um die Breite des Längsträgers (24) voneinander beabstandet sind.

5. Transportvorrichtung nach einem der vorangehenden Ansprüche, **dadurch gekennzeichnet, daß** die Länge der Aufnahmevorrichtung (3) der Länge eines oder mehrerer zu transportierender Gegenstände (1) entspricht.

6. Transportvorrichtung nach einem der vorangehenden Ansprüche, **dadurch gekennzeichnet, daß** das Hubfahrzeug (14) Räder (16, 18) aufweist.

7. Transportvorrichtung nach Anspruch 6, **dadurch gekennzeichnet, daß** mindestens ein Rad (16, 18) angetrieben ist.

8. Transportvorrichtung nach einem der vorangehenden Ansprüche, **dadurch gekennzeichnet, daß** das Hubfahrzeug (14) zum Betrieb in einem Transportkanal (8) Tragräder (16) und seitliche Führungsräder (18) aufweist.

9. Transportvorrichtung nach einem der vorangehenden Ansprüche, **dadurch gekennzeichnet, daß** die Aufnahmeeinrichtung (3) in einem Bodenbereich (4) angeordnet ist, wobei das Hubfahrzeug (14) in einem unterflur angeordneten Transportkanal (8) arbeitet.

10. Transportvorrichtung nach Anspruch 9, **dadurch gekennzeichnet, daß** die Aufnahmeeinrichtung (3) für Flurförderfahrzeuge überfahrbar ist.

11. Transportvorrichtung nach einem der vorangehenden Ansprüche, **dadurch gekennzeichnet, daß** das Hubfahrzeug (14) mehrere unabhängig voneinander betätigbare Tragroste (22) aufweist.

12. Transportvorrichtung nach einem der vorangehenden Ansprüche, **dadurch gekennzeichnet, daß** Trag- und Aufnahmeroste (22; 3a, 3b) jeweils in Querrichtung zylindrische Oberflächenkontur zum Transportieren zylindrischer Gegenstände, insbesondere Papierrollen (1), aufweisen.

13. Transportvorrichtung nach einem der vorangehenden Ansprüche, **dadurch gekennzeichnet, daß** das Hubfahrzeug (14) als Satellitenfahrzeug eines Förderfahrzeugs (36) ausgebildet ist.

14. Transportvorrichtung nach Anspruch 13, **dadurch gekennzeichnet, daß** das Förderfahrzeug als Regalfahrzeug ausgebildet ist, mit dem das Hubfahrzeug (14) horizontal und vertikal verfahrbar ist.

15. Transportvorrichtung nach Anspruch 13 oder 14, **dadurch gekennzeichnet, daß** das Hubfahrzeug (14) energie- und steuerungstechnisch über mindestens ein ausziehbares Kabel mit dem Förderfahrzeug (36) verbunden ist.

16. Transportvorrichtung Anspruch 13 oder 14, **dadurch gekennzeichnet, daß** das Hubfahrzeug (14) selbständig angetrieben ist und eine drahtlose Fernsteuerung aufweist.
